# EUROPÄISCHE PATENTSCHRIFT

(11) **EP 2 602 433 B1**
(45) Veröffentlichungstag und Bekanntmachung des Hinweises auf die Patenterteilung: **21.02.2018**
(21) Anmeldenummer: 13001139.8
(22) Anmeldetag: 14.09.2006
(51) Int. Cl.: F01D 5/00

(54) **Verfahren zum Herstellen eines zu beschichtenden Gasturbinen-Bauteils mit freigelegten Öffnungen**
Method to produce a coated gas turbine component having opening holes
Méthode de fabrication d'un composant de turbine à gaz revêtu et ayant des ouvertures

(30) Priorität: 26.09.2005 EP 05020966
(43) Veröffentlichungstag der Anmeldung: 12.06.2013
(62) Teilanmeldung aus: 06793518.9
(73) Patentinhaber: Siemens Aktiengesellschaft, 80333 München (DE)
(72) Erfinder: Bolms, Hans-Thomas, Dr., 45481 Mülheim an der Ruhr (DE); Irmisch, Stefan A., Dr., 5452 Oberrohrdorf (CH); Münzer, Jan, 10439 Berlin (DE)

(56) Entgegenhaltungen:
- EP-A- 1 510 283
- EP-A- 1 520 652
- US-A1- 2003 123 707
- US-B1- 6 380 512
- US-B1- 6 723 951

## Beschreibung

Die Erfindung betrifft ein Verfahren zum Herstellen eines zu beschichtenden Gasturbinen-Bauteils mit freigelegten Öffnungen, wobei die Oberflächengestalt des Bauteils zum Erfassen der Lage und der Form der Öffnungen vor dessen Beschichtung vorbestimmt und gespeichert wird und nach dessen Beschichtung zum Freilegen der mit Beschichtungsmaterial überdeckten Öffnungen das Steuerungssystem basierend auf der vorbestimmten Oberflächengestalt des Bauteils ein Werkzeug gegenüber dem Bauteil derartig positioniert wird, dass das Werkzeug die entsprechende Öffnung durch das lokale Entfernen des Beschichtungsmaterials freilegt oder ihre Form wieder herstellt. Ferner betrifft die Erfindung eine Vorrichtung zum Durchführen des Verfahrens.

Es sind hohle, aus Superlegierungen hergestellte Turbinenleitschaufeln und -laufschaufeln mit Filmkühlbohrungen bekannt, aus denen beim Betrieb Kühlluft ausströmen kann. Die Kühlluft ruft auf der Oberfläche der Turbinenschaufel, insbesondere auf deren Tragflächenprofil einen Kühlfilm hervor, welcher das Turbinenschaufelmaterial vor dem Wärmeeintrag aus dem die Turbinenschaufel umströmenden Heißgas schützt. Diese Filmkühlbohrungen durchdringen die Bauteilwand und sind derartig in der Schaufeloberfläche angeordnet, dass das Bohrungsmuster, d.h. die Anordnung der Bohrungen untereinander und die Öffnungsgeometrie jeder Bohrung, und der durch die Bohrungen ausgeblasene Kühlluftmassenstrom einen zusammenhängenden, schützenden Kühlfilm erzeugen.

Aufgrund der besonders hohen thermischen Belastungen sind die heißgasbeaufschlagten Bereiche der Turbinenschaufeln der vorderen Turbinenstufen zusätzlich mit Oxidationsschutzschichten und/oder Wärmedämmschichten versehen. Als Oxidationsschutzschichten werden so genannte MCrAlY-Beschichtungen auf der Basis der entsprechenden Superlegierung verwendet, die mit Plasmaspritzverfahren aufgebracht werden. Zusätzlich kommt eine Wärmedämmschicht aus teilstabilisiertem Zirkonoxid zum Einsatz. Diese Oxidkeramik wird nach der MCrAlY-Beschichtung mit Hilfe des Vakuumaufdampfverfahrens EB-PVD oder durch atmosphärisches Plasmaspritzen (APS) auf die zu schützenden Bereiche der Turbinenschaufel aufgebracht.

Die Filmkühlöffnungen werden in der Regel nach der MCrAlY-Beschichtung mittels Laserbohren oder Funkenerosion eingebracht, insbesondere, wenn im Anschluss eine Wärmedämmschicht mittels EB-PVD-Verfahren aufgedampft wird. Kommt stattdessen das APS-Verfahren für die Applikation der Wärmedämmschicht zum Einsatz, erfolgt das Einbringen zylindrischer Bohrungen mittels Laserstrahlung meist danach, also durch die keramische Wärmedämmschicht hindurch. Da nicht zylindrische, sondern profilierte diffusorförmige Filmkühlöffnungen als Formöffnungen fast ausschließlich mittels Funkenerosion hergestellt werden, müssen diese jedoch vorher eingebracht werden, weil die keramische Wärmedämmschicht nicht elektrisch leitfähig und daher eine Herstellung der Formöffnungen dementsprechend nicht möglich ist. Werden die Formöffnungen jedoch vor der Beschichtung der Wärmedämmschicht im APS-Verfahren hergestellt, so müssen diese zumeist sehr aufwändig durch Masken geschützt werden, weil durch die Beschichtung ihre Geometrie und Kontur unzulässig verändert werden würde (Coat Down Effekt).

Da der Niederschlag von Beschichtungsmaterial in den Formöffnungen zu einer unzulässigen Beeinträchtigung der späteren Filmkühlwirkungen führt (aufgrund der dadurch veränderten Öffnungsgeometrie, wodurch sich die Kühlluftstrahlaustrittsbreite, die Raumrichtung des Kühlluftimpulses und der Kühlluftmassenstrom verändert), muss das Beschichtungsmaterial im Anschluss an die Beschichtung (oder an die Wiederbeschichtung eines zu sanierenden Bauteils) in einer Nachbearbeitung sorgsam aus den überdeckten Formbohrungen entfernt werden, um die vorgegebene und gewünschte Geometrie der Formöffnungen für die bedarfsgerechte Kühl- und Schutzwirkung der ausgeblasenen Kühlluft wieder herzustellen.

Dazu offenbart das US-Patent 6,380,512 B1 ein Verfahren zum Entfernen von Beschichtungsmaterial aus den Austrittsöffnungen von zylindrischen Filmkühlbohrungen mittels Laserstrahlung. Das weitgehend programmgesteuerte Verfahren ermittelt die genaue Lage der zu bearbeitenden Bohrung auf der Oberfläche des Bauteils, ausgehend von den elektronisch bereitgestellten dreidimensionalen Konstruktionsdaten mit Referenz zu einem definierten Aufnahmesystem für die Turbinenschaufel. Mit einer zur Vorrichtung gehörenden, dreiachsigen Aufnahme-vorrichtung für die Turbinenschaufel wird diese von einer CNC-Maschine relativ zu einem Bohrlaser und einer Video-Optik bewegt und im Raum positioniert. Aufgrund von Geometrieveränderungen durch Betriebsbeanspruchung und/oder Fertigungs- und Reparaturprozessen im Lebenszyklus des realen Bauteils weicht jedoch die tatsächliche Geometrie von der theoretischen oder ursprünglichen dreidimensionalen Definition ab. Eine Videokamera mit konzentrisch zur Laseroptik ausgerichteter Optik nimmt ein Bild der ggf. verschlossenen Austrittsöffnung der Bohrung auf. Das in Bohrungslängsrichtung projizierte, zweidimensionale Abbild wird anschließend mittels einer Bildverarbeitungssoftware ausgewertet, so dass daraus die Lage des jeweiligen Bohrungsmittelpunktes in der Projektionsebene annähernd bestimmt werden kann. Nach der Erfassung aller Bohrungen werden diese mit den 3D-Konstruktionsdaten verglichen, um daraus die möglichst exakte, d. h. mit großer Wahrscheinlichkeit die tatsächliche Position der Bohrung zu bestimmen. Danach wird die Öffnung mittels Laserbohren freigelegt. Die Positionierung der Turbinenschaufel, das Erfassen der ggf. verdeckten Bohrungsposition, die Berechnung der wahrscheinlich tatsächlichen Lage ausgehend von den 3D-Konstruktionsdaten und das Entfernung des Beschichtungsmaterials wird dann für jede Öffnung wiederholt.

Es erfolgt somit lediglich eine zweidimensionale Abbildung der Bauteilgeometrie in einer Projektionsebene der Kameraoptik. Diese Abbildungen müssen mit den dreidimensionalen Konstruktionsdaten des Bauteils unter Berücksichtigung des dazugehörigen bauteilabhängigen Referenz-Aufnahmesystems aufwändig verknüpft werden, um die tatsächliche Lage der Bohrungen in der Turbinenschaufel bestimmen zu können. Daher muss das Bauteil in definierter Weise in einem Referenz-System aufgenommen werden, um so über ein gemeinsames Koordinatensystem den Bezug zwischen der dreidimensionalen Bauteilgeometrie und der Position des Bohrlasers im Raum herstellen zu können.

Eine programmgesteuerte Bearbeitung von nicht zylindrischen Bohrungsstrukturen bzw. Formbohrungen (so genannte fan shaped holes) kann mit dem aus dem nächstliegenden Stand der Technik beschriebenen Verfahren aufgrund der zweidimensionalen Verarbeitung nicht erfolgen. Außerdem hängt die Bearbeitung der teilweise stark oder vollständig mit Beschichtungsmaterial, mit Lötgut oder mit Schweißzusatzwerkstoff verschlossenen zylindrischen Bohrungen von der Lageerkennungssoftware ab, wobei das bekannte Verfahren anhand des abgespeicherten Datensatzes hinsichtlich der erzielbaren Positionierbarkeit eingeschränkt ist.

Insbesondere im APS-Verfahren aufgetragene Wärmedämmschichten verschließen die zylindrischen Bohrungen fast vollständig, so dass eine Freilegung der damit zumindest teilweise verschlossenen Öffnungen nicht oder nicht mit ausreichender Genauigkeit möglich ist. Darüber hinaus lassen sich dreidimensionale Strukturen in nichtleitender Keramikbeschichtung, z.B. also diffusorförmige Formöffnungen, bisher nicht mittels Laserstrahlung und damit generell nicht maschinell im Anschluss an eine preisgünstige APS-(Wieder-)Beschichtung bearbeiten.

Es ist auch aus der US 6,380,512 B1 bekannt, dass die Bestimmung der tatsächlichen Lage jeder Öffnung ausschließlich durch einen optischen Abtastvorgang erfolgen kann, welcher vor der Beschichtung der Turbinenschaufel erfolgt. Dies ist jedoch sehr aufwändig.

Aus der EP 1 510 283 A1 ist ebenfalls ein Verfahren zur automatisierten Bearbeitung eines verstopften Durchlasses eines Gegenstands, z. B. eine Turbinenkomponente aus einer Superlegierung ist, die Kühldurchlässe aufweist, bekannt. Dabei erfolgt in der EP 1 510 283 A1 die Lokalisierung der Durchlässe erst nach einer Erstbeschichtung des Gegenstandes. Aufgabe der Erfindung ist daher die Bereitstellung eines einfachen Verfahrens zum Erfassen und Herstellen eines zu beschichtenden Gasturbinen-Bauteils mit freigelegten Öffnungen, mit dem das Entfernen von Beschichtungsmaterial von mit diesem überdeckten nicht zylindrischen und zylindrischen Filmkühlöffnungen in Gasturbinen-Bauteilen möglich ist. Ferner ist es Aufgabe der Erfindung, hierzu eine entsprechende Vorrichtung und eine in ihrer dreidimensionalen Struktur besonders einfach erfassbare Turbinenschaufel anzugeben.

Die auf das Verfahren gerichtete Aufgabe wird durch die Merkmale des Patentanspruchs 1 gelöst. Die Erfindung schlägt vor, dass im gattungsgemäßen Verfahren die tatsächliche Oberflächengestalt des Bauteils zum Erfassen der Lage der Öffnungen vor dessen Beschichtung optisch dreidimensional erfasst wird.

Die Erfindung geht von der Erkenntnis aus, dass der Konstruktionsdatensatz mit den im dreidimensionalen Raum beschriebenen Positionen der Filmkühlöffnungen aus dem nächstliegenden Stand der Technik nicht erforderlich ist, wenn vor dem Beschichten die toleranzabhängige tatsächliche Oberflächengestalt des Bauteils und der darin befindlichen Öffnung von einem Video-System vor dem Beschichten dreidimensional erfasst werden. Es werden durch die dreidimensionale Erfassung die Bauteilgeometrien sowie die Bauteiloberflächengestalt auch in einer räumlichen Tiefe erfasst, so dass mittels eines geeigneten und im Raum beweglichen Werkzeuges die ursprünglich existierende Form der Bauteiloberflächengestalt nach der Beschichtung maschinell teilweise wieder herbeiführbar ist, indem nach der Erfassung das auf der Oberflächengestalt danach aufgetragene Beschichtungsmaterial konturgenau entfernt wird.

Mit dem erfindungsgemäßen Verfahren ist es erstmals möglich, auch dreidimensionale Strukturen, wie beispielsweise Formöffnungen und diffusorförmige Kühlluftöffnungen (fan shaped holes) nach dem Beschichten des die Öffnungen umgebenden Schaufelmaterials mittels eines geeigneten Werkzeuges korrekt in ihrer ursprünglichen Position und Kontur nachzuarbeiten, da vor dem Beschichten der Ursprungszustand jeder Formöffnung selbst und ihre Position auf dem Bauteil oder beispielsweise ihre Positionierung zur zylindrischen Versorgungsbohrung vorbestimmt wurde. Die Bearbeitung kann aufgrund der hohen Präzision des Messsystems äußerst exakt erfolgen. Durch das beschriebene Verfahren ist die Bearbeitung von fast oder vollständig durch eine oder mehrere Beschichtungen verschlossenen Formöffnungen, insbesondere trotz Anwendung des kostengünstigen APS-Verfahrens, möglich. Dies gilt in besonderer Weise für diffusorförmige Formöffnungen, aber ebenso für zylindrische Bohrungen. Ebenfalls neu ist, dass beide Schutzschichten, also die metallische MCrAlY-Oxidationsschutzschicht und die keramische Wärmedämmschicht, obwohl ihrer unterschiedlichen mechanischen und elektrischen Eigenschaften mittels eines einzigen Werkzeuges, beispielsweise mittels eines Bohrlasers, in einem Arbeitsvorgang aus den konturierten Filmkühlöffnungen, d.h. Formöffnungen entfernt werden können, was weitere Kosten- und Zeitvorteile bedingt.

Vorteilhafte Ausgestaltungen werden in den Unteransprüchen angegeben.

Die dreidimensionale Erfassung erfolgt mittels eines Triangulationsverfahrens. Dieses Verfahren weist eine höhere Messgenauigkeit als das bekannte Messverfahren auf. Außerdem ermöglicht dieses Verfahren eine exakte Bestimmung der Oberflächengestalt bzw. dessen Reliefs im dreidimensionalen Raum, also auch in die Raumtiefe, und nicht lediglich in der zweidimensionalen Ebene. Daher ist dieses Verfahren besonders geeignet zur dreidimensionalen Erkennung von in einer Turbinenschaufel eingebrachten Formöffnungen.

Die aktuelle Lage des Bauteils bzw. der Formöffnungen wird unter Verwendung eines an dem Bauteil vorgesehenen Referenzgeometrieelementes oder im Bezug auf ein globales Koordinatensystem berechnet. Eine kostenintensive bewegliche Halterung, wie beim bekannten Stand der Technik, kann dementsprechend entfallen, da die Erfassung der Oberflächengestalt des Bauteils und auch der Öffnungen unabhängig von der relativen Position des Bauteils zum Video-System erfasst werden kann. Dadurch ist es möglich, dass das Bauteil auch im noch eingebauten Zustand in einer Maschine, in-situ, mit einer geeigneten Vorrichtung vermessen und auch bearbeitet werden kann.

Dabei ist das in seiner Form frei wählbare, räumliche Referenzgeometrieelement vorzugsweise an einem Bereich des Bauteils angeordnet, welcher nicht beschichtet wird. Damit ist es möglich, ein Referenzgeometrieelement zur Vorbestimmung der Oberflächengestalt des Bauteils zu erfassen, welches nach dem Beschichten unverändert in einem zweiten Vermessungsvorgang vom Video-System und dem Steuerungssystems eindeutig (wieder-)erkennbar und als Koordinatenursprung zuzuordnen ist. Bei der Erfassung des unbeschichteten Bauteils werden die zur Bestimmung der Oberflächengestalt des Bauteils genutzten und gespeicherten Koordinaten bzw. Daten somit auf das Referenzgeometrieelement bezogen, ebenso werden zum Entfernen des Beschichtungsmaterials diese Daten auf das vom Video- und Steuerungssystem wieder erkannte Referenzgeometrieelement bezogen. Eine mit dem Steuerungssystem in Verbindung stehende Referenz-Haltevorrichtung, wie beim Stand der Technik, ist nicht zwingend erforderlich.

Zur Bestimmung der Oberflächengestalt des Bauteils projiziert in vorteilhafter Weise ein Projektor ein Referenzmuster, vorzugsweise ein bewegtes Streifenbild, auf das Bauteil. Aufgrund der profilierten, nicht ebenen Oberfläche des Bauteils zeichnet sich das Referenzmusters gegenüber seinem ursprünglichen und bekannten Muster auf diesem verzerrt ab. Die angestrahlte Turbinenschaufel wird mit den Verzerrungen vom Video-System als Bild aufgenommen und elektronisch an das Steuerungssystem weitergeleitet. Das Steuerungssystem nutzt das sich verzerrt auf dem Bauteil abzeichnende Referenzmuster, um daraus die dreidimensionalen Koordinaten der tatsächlichen Oberflächengestalt des Bauteils und somit auch der nicht zylindrisch geformten Formöffnungen rechnerisch zu bestimmen und zu speichern. Diese Vorbestimmung der Lage der Formöffnungen jedes ggf. zu bearbeitenden individuellen Bauteils ist vor dessen Beschichtung bzw. vor dessen Wiederbeschichtung mittels des Video-Systems und des Steuerungssystems durchzuführen. Damit ist es möglich, das Bauteil im Rohzustand oder vor einer weiteren Beschichtung mit bereits eingebrachten Filmkühlöffnungen detailgetreu und exakt zu erfassen und die dreidimensionalen Koordinaten der Oberflächengestalt als Daten im Steuerungssystem elektronisch zu speichern. Nach durchgeführter Beschichtung werden diese Daten von der Vorrichtung verwendet, um die ggf. teilweise oder ganz bedeckten Formöffnungen durch lokales Entfernen von Beschichtungsmaterial freizulegen. Aufgrund des verwendeten Triangulationsverfahrens mit der beschriebene 3D-Streifenlicht-Scan-Technik kann eine aufwändige Ausleuchtung des Bauteils oder auch eine Oberflächenvorbehandlung entfallen, wie beim bekannten Stand der Technik.

Da die Bauteiloberfläche im Bezug auf ein globales Koordinatensystem oder auf ein Referenzgeometrieelement des im Rohzustand bzw. im unbeschichteten Zustand vermessenen Bauteils berechnet wird, kann das Werkzeug entlang der Kontur der Öffnungen bewegt werden und das in diesem Bereich die Kühlluftströmung negativ beeinflussende Beschichtungsmaterial konturexakt entfernen.

Vorzugsweise wird das Beschichtungsmaterial mittels eines Bohrlasers, mittels eines mechanischen oder eines chemischen Abtragverfahrens oder Funkenerosion entfernt. Diese kostengünstigen Verfahren sind aus dem Stand der Technik bekannt und weisen die erforderliche Genauigkeit auf, um die gewünschte Kontur der Formöffnungen herzustellen.

Die zweitgenannte Aufgabe wird durch die Bereitstellung einer Vorrichtung gemäß den Merkmalen des Patentanspruchs 5 gelöst.

Die Erfindung schlägt vor, dass das Video-System mindestens einen Projektor und mindestens zwei Kameras aufweist, die zum dreidimensionalen Erfassen der Oberflächengestalt des zu bearbeitenden Bauteils angeordnet sind.

Dabei wird das Bauteil von einem Projektor mit einem Referenzmuster angestrahlt, das aus vorzugsweise bewegten Lichtstreifen besteht. Aufgrund der profilierten Oberflächengestalt des Bauteils zeichnen sich die vom Projektor als Referenzmuster projizierten parallelen Lichtstreifen verzerrt auf dem Bauteil ab. Die Verzerrungen werden von zwei in einer Ebene liegenden Kameras in Form von Bildern aufgenommen und an das Steuerungssystem weitergeleitet, welches daraus die tatsächliche Oberflächengestalt erfasst und elektronisch in dreidimensionalen Koordinaten speichert. Da außerdem jede Kamera eine optische Achse aufweist, welche sich unter einem Winkel treffen, kann unter Anwendung des Triangulationsverfahrens die Koordinate jedes auf der Oberfläche des Bauteils liegenden Punktes von dem Steuerungssystem, vorzugsweise bezogen auf das Referenzgeometrieelement, ermittelt bzw. errechnet werden. Dadurch ist es möglich, ein vor einer Bearbeitung abgetastetes und erfasstes Bauteil nach dessen Bearbeitung, beispielsweise Beschichtung, bereichsweise in den ursprünglichen Zustand zurückzuführen bzw. dessen ursprüngliche Oberflächengestalt mittels eines geeigneten Werkzeuges wieder herzustellen.

Folglich kann das vorgenannte Problem mit äußerst geringem apparativem Aufwand und mit geringer Mess- und Bearbeitungszeit gelöst werden, ohne dass aufwändige Maßnahmen, wie eine spezielle Ausleuchtung oder eine teure Oberflächenvorbehandlung erforderlich sind. Auch die Bereitstellung und Verwendung der original 3D-Konstruktionsdaten sowie der zeitintensive Abgleich zwischen diesen Daten und den beim optischen Abtastvorgang ermittelten Daten werden hinfällig. Außerdem entfällt eine kostenintensive Referenz-Aufnahme-Vorrichtung, wie sie aus dem Stand der Technik bekannt ist. Darüber hinaus ist sogar die in-situ Bearbeitung von Bauteilen möglich.

Aufgrund des am Bauteil angeordneten erfindungsgemäßen Referenzgeometrieelementes ist es möglich, eine besonders preiswerte Halterung für die erfindungsgemäße Vorrichtung bereitzustellen, in der das Bauteil lediglich starr gehaltert ist. Aufgrund des von der Vorrichtung durchführbaren Verfahrens ist es möglich, das alle mit beiden Kameras in Sichtverbindung stehenden Öffnungen von diesen erfasst werden können. Das Bauteil muss zum Freilegen der Öffnungen nicht mehr relativ zum Video-System bewegt werden. Alle aus einer Perspektive erfassten Formöffnungen, können von der erfindungsgemäßen Vorrichtung mittels des Werkzeugs freigelegt werden. Die Erfassung der Geometriedaten bzw. der Oberflächengestalt des später zu bearbeitenden Bauteils erfolgt vorzugsweise großflächig aus zwei oder mehr Perspektiven, um sämtliche Oberflächen des Bauteils zu erfassen, in denen Formöffnungen vorgesehen sind. Die vom Steuerungssystem errechneten Koordinaten - Geometriedaten - zweier Perspektiven werden von diesem verknüpft und auf das Referenzgeometrieelement bezogen, so dass ausgehend von diesem als Koordinatenursprung die äußere Kontur des betrachteten bzw. des erfassten Bauteils vom Steuerungssystem ermittelt und in diesem gespeichert werden. Nach dem Beschichten des Bauteils kann dieses mittels der Vorrichtung aus einer ähnlichen Perspektive erneut erfasst werden. Dabei werden neue, die beschichtete Oberfläche beschreibenden Koordinaten vom Steuerungssystem ermittelt, um anschließend die ggf. teilweise vom Beschichtungsmaterial verdeckten oder überdeckten Formöffnungen konturgetreu freizulegen. Beim ersten Erfassen des beschichteten individuellen Bauteils ist lediglich darauf zu achten, dass das an dem Bauteil vorhandene unbeschichtete Referenzgeometrieelement mit erfasst wird, um die die Oberfläche beschreibenden Koordinaten darauf zu beziehen.

Das zu bearbeitende Bauteil muss nicht für jede zu öffnende bzw. freizulegende Filmkühlöffnung gegenüber dem Video-System bewegt werden. Lediglich das Werkzeug wird gegenüber dem Bauteil bewegt. Außerdem können sämtliche von beiden Kameras bei einem Scan-Vorgang erfassten Formöffnungen nacheinander freigelegt werden. Dies führt zu einer besonders schnellen Bearbeitung und somit zu einer verkürzten Bearbeitungsdauer des Bauteils.

Die auf die Turbinenschaufel gerichtete Aufgabe wird durch die Merkmale des Anspruchs 10 gelöst.

Ein Ausführungsbeispiel der Erfindung wird nachstehend anhand der Zeichnung erläutert.

Es zeigen:

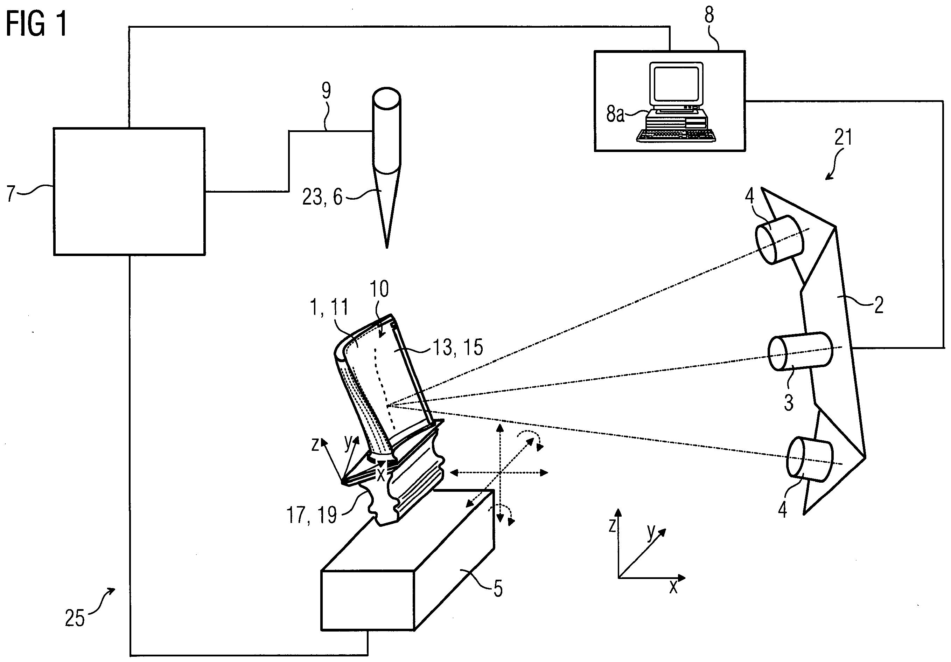

- FIG 1: eine perspektivische Ansicht einer Vorrichtung zum Durchführen eines Verfahrens zum Herstellen eines beschichteten, mit Öffnungen versehenen Bauteils,
- FIG 2: eine perspektivische Ansicht einer beschichteten Turbinenschaufel mit im Tragflügelprofil angeordneten Filmkühlöffnungen,
- FIG 3: eine Detailansicht einer teilweise mit Beschichtungsmaterial überdeckten Filmkühlöffnung zur Ausblasung von Kühlluft der Turbinenschaufel von FIG 2,
- FIG 4: eine erste Schnittdarstellung der teilweise beschichteten Filmkühlöffnung gemäß FIG 3 und
- FIG 5: eine zweite Schnittdarstellung der teilweise beschichteten Filmkühlöffnung gemäß FIG 3.

Die Erfindung wird am Beispiel des Entfernens von Beschichtungsmaterial von mit diesem überdeckten Öffnungen in Turbinenschaufeln beschrieben. Anstelle des Entfernens von Beschichtungsmaterial kann mit dem Verfahren und der Vorrichtung auch das Bauteil anderweitig modifiziert und bearbeitet werden. Beispielsweise kann das Bauteil geschliffen werden oder es können auch nachträglich Bohrungen hinzugefügt oder bereits bestehende Bohrungen wieder verschlossen werden. Kombinationen unterschiedlicher Bearbeitungen sind auch denkbar. Die Anwendung des Verfahrens und der Vorrichtung ist demnach nicht auf das nachstehende Ausführungsbeispiel beschränkt.

Das im Rahmen seines Herstellungsprozesses zu bearbeitende Bauteil 1 ist eine Turbinenschaufel 11 einer Gasturbine. Die Turbinenschaufel 11 ist zum Entfernen von auf seiner Oberfläche 13 befindlichem Material in einer eigens dafür ausgebildeten Halterung 5 gehalten oder auch in der Maschine, beispielsweise in einer Gasturbine, befestigt.

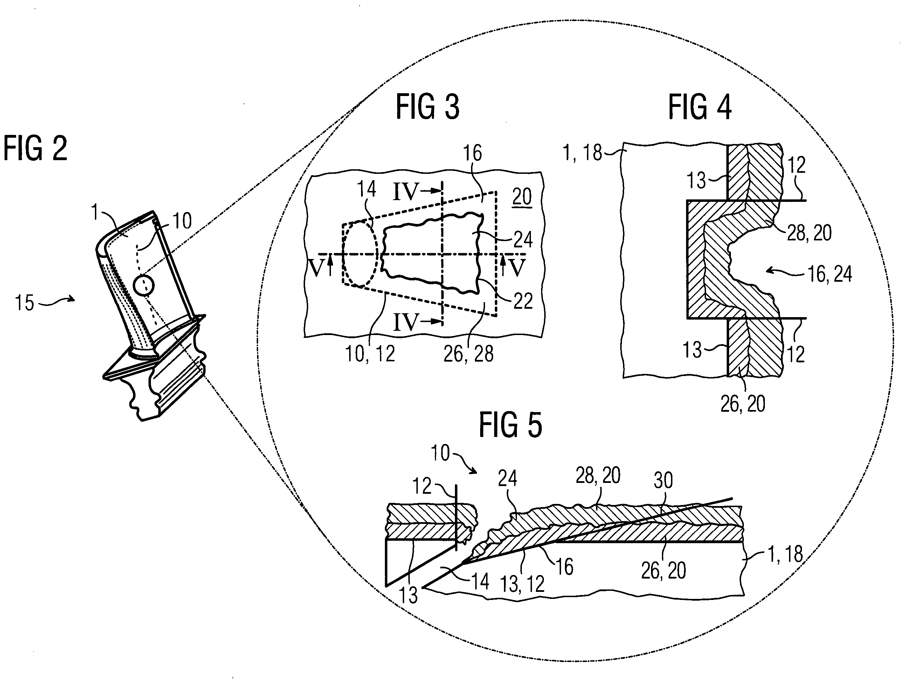

Die Turbinenschaufel 11 weist in einem Tragflächenprofil 15 angeordnete Formöffnungen auf, die als Filmkühlöffnungen 10 dienen. Durch jede Filmkühlöffnung 10 kann beim Einsatz der Turbinenschaufel 11 in einer Gasturbine ein Kühlluftstrahl austreten. Aufgrund der Nebeneinanderreihung der Filmkühlöffnungen 10 verbinden sich die einzeln austretenden Kühlluftstrahlen zu einem flächigen Kühlluftfilm, der das Bauteil 1 vor einem das Tragflächenprofil 15 umströmenden Heißgas wirksam schützten soll. Um einen lückenlosen und besonders zuverlässigen Kühlluftfilm zu erreichen, mündet jede Formöffnung in der Bauteiloberfläche nicht in einer kreisrunden oder ovalen Form, sondern in einem konturierten, diffusorförmigen Austrittsbereich (FIG 3).

Außerdem ist ein an dem Bauteil 1 vorgesehenes und in seiner Gestalt frei wählbares räumliches Referenzgeometrieelement 17, beispielsweise ein dreidimensionales Fadenkreuz vorgesehen. Bei der Turbinenschaufel 11 ist das Referenzgeometrieelement 17 in einem nicht zur Beschichtung vorgesehenen Bereich, beispielsweise am Schaufelfuß 19 angeordnet. Wenn die Vorrichtung eine eigene, dedizierte Halterung 5 oder Aufnahmevorrichtung aufweist, kann das Referenzgeometrieelement 17 am Bauteil 1 entfallen.

Die Vorrichtung 25 zum Entfernen des Materials vom Bauteil 1 weist ein als Streifenlicht-Scanner 2 ausgebildetes Video-System 21 auf, umfassend einen Projektor 3 zum Projizieren von bewegten Lichtstreifen auf das Bauteil 1 und zwei Digital- oder Videokameras 4, die im Winkel zueinander montiert sind. Das Video-System 21 steht mit einem Steuerungssystem 8 in Verbindung, welches die von den Videokameras 4 aufgenommenen Bilder des Bauteils 1 als Messdaten miteinander verknüpft. Mit einer kommerziell verfügbaren Software kann das beispielsweise als Computer 8a ausgebildete Steuerungssystem 8 daraus unter Anwendung des Triangulationsverfahrens die Oberflächengestalt des erfassten Bauteils 1 in Koordinaten umrechnen, welche die Oberflächengestalt, also einschließlich der darin vorgesehenen Formöffnungen, dreidimensional beschreiben. Diese beispielsweise in kartesicher Form X,Y,Z abgelegten Koordinaten beziehen sich auf das miterfasste und als Koordinatenursprung verwendete Referenzgeometrieelement 17 und werden anschließend elektronisch, beispielsweise auf einer Festplatte des Computers 8a gespeichert.

Ferner umfasst die Vorrichtung 25 ein Werkzeug 23 zum Entfernen des Beschichtungsmaterials 20, beispielsweise einen Bohrlaser 6 oder einem korrespondierend zu der Kontur 12 (FIG 3) der Formöffnungen bzw. der Filmkühlöffnungen 10 ausgebildetes Erosionswerkzeug. Außerdem weist die Vorrichtung 25 für das Werkzeug 23 ein Bewegungssystem 9 mit einer CNC-Steuerung 7 auf.

Das Werkzeug 23 ist an dem freien Ende des beispielsweise mit mehreren Freiheitsgraden ausgestatteten roboterarmähnlichen Bewegungssystems 9 angebracht und kann jeden Punkt der Oberfläche 13 des erfassten Bauteils 1 erreichen, um diese zu modifizieren und/oder nachzuarbeiten. Auch denkbar ist ein Bewegungssystem 9 nach Art einer CNC-Maschine, bei dem zusätzlich das Bauteil 1 mittels der als Positioniermechanik ausgebildeten Halterung 5 bewegt wird.

Vor dem Beschichten des unbehandelten Bauteils 1 wird in einem ersten Verfahrenschritt dieses von der erfindungsgemäßen Vorrichtung 25 erfasst und die die Oberflächengestalt dreidimensional beschreibenden Koordinaten als Bauteilgeometriedaten gespeichert, um dessen ursprüngliche Kontur nach der Bearbeitung teilweise oder bereichsweise wieder herzustellen. Die Vorerfassung kann durch eine oder mehrere Bildaufnahmen des Video-Systems 21 von sich überschneidenden Bildern erfolgen. Beispielweise kann die beschichtete Oberfläche des Bauteils 1 aus drei Perspektiven vollständig aufgenommen werden: eine erste Bildaufnahme zeigt die Vorderseite, eine zweite Bildaufnahme die Seitenansicht und eine dritte Bildaufnahme die Rückseite des Bauteils 1. Jede Bildaufnahme erfasst somit das Bauteil 1 großflächig.

Nach erfolgter Bearbeitung des Bauteils 1 durch z.B. Schweißen oder Löten, vor allem aber nach dem Beschichten oder auch Wiederbeschichten mit einer metallischen Oxidationsschutzschicht 26 und/oder einer keramischen Wärmedämmschicht 28, kann sehr exakt das Beschichtungsmaterial 20 aus den Filmkühlöffnungen 10 bzw. Formöffnungen, mittels des Werkzeugs 6 entfernt werden. Hierzu wird nach dem Beschichten in einem zweiten Verfahrenschritt zuerst die Vorderseite des bearbeiteten Bauteils 1, beispielsweise die beschichtete Turbinenschaufel 11, erneut vom Video-System 21 aufgenommen und vom Steuerungssystem 8 erfasst. Die erneut erfassten Bauteilgeometriedaten werden von dem Steuerungssystem 8 mit den ursprünglich erfassten Bauteilgeometriedaten verglichen. Dadurch werden selbst bei im zweiten Verfahrenschritt nicht erfassten, weil von Beschichtungsmaterial 20 vollständig verdeckten Formöffnungen trotzdem aufgrund ihrer im ersten Verfahrenschritt vorbestimmten und somit bekannten Lage exakt lokalisiert.

Alle bei der großflächigen Bildaufnahme erfassten bzw. lokalisierten Formöffnungen werden anschließend vom Steuerungssystem 8 oder Computer 8a freigelegt, indem dieses die CNC-Maschine und das Werkzeug 6 unter Verwendung der im ersten Verfahrenschritt ermittelten Bauteilgeometriedaten steuert. Jede Formöffnung wird dementsprechend in ihrer ursprünglichen Kontur 12 wieder hergestellt, indem das darin abgelagerte Beschichtungsmaterial 20 vom Werkzeug 6 entfernt wird. So werden nacheinander alle bei der Bildaufnahme lokalisierten Formöffnungen nachgearbeitet, ohne dass für jede Formöffnung eine eigene Bildaufnahme notwendig ist, wie beim Stand der Technik.

Danach kann durch eine zweite Bildaufnahme die Rückseite des Bauteils 1 erfasst und die auf dieser Seite vorgesehenen Formöffnungen entsprechend bearbeitet werden.

Wenn das zu bearbeitende Bauteil 1 in einer eigens dafür ausgebildeten Halterung 5, die bei Bedarf ebenfalls mit mehreren Freiheitsgraden beweglich sein kann, ausgestattet ist, kann das Bauteil 1 in die ursprüngliche Lage, d.h. in die Lage während der ersten Erfassung eingeschwenkt und damit zur Deckung gebracht werden. Dies verringert die Berechnungszeit für das Steuerungssystem 8.

Alternativ können auch Öffnungen, die z.B. durch Löten verschlossen worden sind, originalgetreu am ursprünglichen Ort wieder geöffnet werden. Dazu werden zur Bearbeitung die im ersten Verfahrenschritt ermittelten Bauteilgeometriedaten hinsichtlich der ursprünglichen Öffnungsposition und Öffnungsgeometrie ausgewertet und vom Steuerungssystem 8 an die CNC-Steuerung 7 übertragen, welche sowohl die Positionierung des Bauteils 1 als auch des Bohrlasers bzw. Werkzeuges 6 steuert.

FIG 2 zeigt die auf der Oberfläche 13 der filmgekühlten Turbinenschaufel 11 in Reihen angeordneten Filmkühlöffnungen 10, die durch ein nachträgliches Beschichtungsverfahren mit Beschichtungsmaterial 20 teilweise verschlossen sein können.

Hierzu zeigt das Detail X exemplarisch in der FIG 3 die Filmkühlöffnung 10, deren ursprüngliche Kontur 12 in gestrichelter Linienart dargestellt ist. Die Filmkühlöffnung 10 setzt sich aus einer die Turbinenschaufelwand schräg durchdringenden zylindrischen Bohrung 14 und einem stromabwärtigen - in Richtung der dadurch ausströmenden Kühlluft betrachtet - Diffusorbereich 16 zusammen, welcher im vorliegenden Beispiel sich in der in FIG 3 gezeigten Ausgestaltung trapezförmig an die oval in der Oberfläche 13 mündende Bohrung 14 anschließt. Die Öffnung der schräg in der Oberfläche 13 mündenden Bohrung 14 sowie der Diffusorbereich 16 stellen den Austrittsbereich 24 für den ausströmenden Kühlluftstrahl dar. Die in gestrichelter Linienart dargestellte Filmkühlöffnung 10 bzw. deren ursprüngliche Kontur 12 ist aufgrund der flächigen Beschichtung des Tragflächenprofils 15 des Bauteils 1 zumindest teilweise mit Beschichtungsmaterial 20 verdeckt, was durch dessen Konturumlauf 22 dargestellt ist. Die vom Konturumlauf 22 eingeschlossene Fläche stellt somit einen tiefer liegenden beschichteten Bereich der ursprünglichen Formbohrung dar.

Um den Diffusorbereich 16 der Filmkühlöffnung 10 freizulegen und an dieser Stelle abgelagertes Beschichtungsmaterial 20 zu entfernen, wird das Werkzeug 6, beispielsweise ein Bohrlaser oder ein anderes geeignetes Mittel bzw. Verfahren, eingesetzt und von dem Steuerungssystem 8 angesteuert. Das Werkzeug 6 wird entlang der ursprünglichen Kontur 12 und über die von dieser eingeschlossenen Fläche bewegt, um dort das Beschichtungsmaterial 20 zu entfernen und die Formöffnung vollflächig freizulegen. Anstelle eines Bohrlasers kann auch ein anderes mechanisches oder chemisches Abtragsverfahren sowie beispielsweise Funkenerosion eingesetzt werden.

FIG 4 und FIG 5 zeigen die Schnittdarstellungen der FIG 3 gemäß den darin beschrifteten Schnitten. In den Schnittdarstellungen ist klar zu erkennen, dass der Austrittsbereich 24, d.h. der Diffusorbereich 16 und die Bohrungsmündung, sowohl durch die Oxidationsschutzschicht 26 als auch die Wärmedämmschicht 28, in seiner geometrischen Form verändert ist, was beim Betrieb die Ausbildung des gewünschten Kühlluftfilms beeinträchtigt und ggf. sogar verhindert.

Durch das von der erfindungsgemäßen Vorrichtung 25 ausführbare Verfahren kann das die Kühlluftströmung beeinträchtigende Beschichtungsmaterial 20 im Austrittsbereich 24 und in der Filmkühlöffnung 10 äußerst exakt und konturgenau entfernt werden, so dass die profilierten ursprünglichen Konturen 12 vergleichsweise schnell und kostengünstig trotz der Beschichtung wieder herstellbar sind.

Außerdem ist es mit dem erfindungsgemäßen Verfahren möglich, dass der Austrittsbereich 24 über das stromabwärtige Ende des Diffusorbereichs 16 hinaus vergrößert wird. Dies führt zur Ausbildung eines besonders effizienten Kühlluftfilms, da die Beschichtungen 26, 28 an dieser Stelle nur teilweise entfernt werden und - in Strömungsrichtung betrachtet - eine größer werdende Materialdicke aufweisen. Die Neigung des Diffusorbereichs 16 (siehe FIG 5) wird also über diesen hinaus fluchtend weiter geführt, so dass - in Strömungsrichtung betrachtet - zuerst die Oxidationsschutzschicht 26 von einer minimalen Schichtdicke zu ihrer maximalen Schichtdicke und nochmals weiter stromabwärts die Wärmedämmschicht 28 ebenfalls von einer minimalen Schichtdicke zu ihrer maximalen Schichtdicke kontinuierlich ansteigt, so wie es die Linie 30 darstellt. Aerodynamisch nachteilige Kanten können somit vermieden werden.

Insgesamt kann mit geringem apparativen Aufwand aufgrund der dreidimensionalen Erfassung des nachzubearbeitenden Bauteils dessen Oberflächengestalt konturgenau ermittelt und zwischengespeichert werden, um beispielsweise nach dessen Beschichtung bereichsweise, d.h. lokal im Bereich von Filmkühlöffnungen seine ursprüngliche oder gewünschte Oberflächenform herzustellen. Eine besonders exakte und schnelle dreidimensionale Erfassung kann durch Anwendung des Triangulationsverfahrens erzielt werden. Dabei wird ein von einem Projektor sich auf dem Bauteil abzeichnendes Referenzmuster von zwei unter einem Winkel angeordneten Kameras erfasst. Aus den Bildern der Kameras können dann von einem Rechner die die Oberfläche dreidimensional beschreibenden Koordinaten unter Verwendung des Triangulationsverfahrens ermittelt werden.

Diese exakte (Wieder-)Herstellung der Konturen der runden Filmkühlöffnungen oder auch anders konturierten Formöffnungen mittels des Verfahrens führen auch zu einer besonders preiswert herstellbaren Turbinenschaufel, da eine die Filmkühlöffnungen vor Beschichtungsmaterial schützende Maskierung entfallen kann, wenn die Turbinenschaufel beschichtet wird. Außerdem kann das besonders günstige APS-Beschichtungsverfahren zum Applizieren der Oxidationsschutzschicht und der Wärmedämmschicht sowie ggf. weiteren Schichten wie Haftvermittlungsschichten oder sonstigen, insbesondere bei der Wiederaufarbeitung bereits gebohrter und betriebsbeanspruchter Bauteile, verwendet werden.

## Patentansprüche

1. Verfahren zum Herstellen eines zu beschichtenden Gasturbinen-Bauteils (1) mit freigelegten Öffnungen,
bei dem die Oberflächengestalt des Bauteils (1) zum Erfassen der Lage und der Form der Öffnungen vor dessen Beschichtung visuell vorbestimmt und gespeichert wird und nach dessen Beschichtung zum Freilegen der mit Beschichtungsmaterial überdeckten Öffnungen die Oberflächengestalt des Bauteils (1) erneut visuell erfasst wird,
wobei basierend auf der vorbestimmten Oberflächengestalt des Bauteils (1) ein Werkzeug (6) gegenüber dem Bauteil (1) derartig positioniert wird, dass das Werkzeug (6) die entsprechende Öffnung durch das lokale Entfernen des Beschichtungsmaterials (20) freilegt,
wobei die tatsächliche Oberflächengestalt des Bauteils (1) dreidimensional erfasst wird,
bei dem die dreidimensionale Erfassung mittels eines Triangulationsverfahrens erfolgt,
bei dem die aktuelle Lage des Bauteils (1) bzw. der Öffnungen unter Verwendung eines an dem Bauteil (1) vorgesehenen, insbesondere unbeschichteten Referenzgeometrieelementes (17) berechnet wird.

2. Verfahren nach Anspruch 1,
bei dem zur Lagebestimmung des Bauteils (1) ein Projektor (3) auf dem Bauteil (1) ein Referenzmuster, vorzugsweise ein bewegtes Streifenbild projiziert.

3. Verfahren nach einem der vorangehenden Ansprüche,
bei dem das Werkzeug (6) entlang der Kontur (12) der Öffnungen bewegt wird.

4. Verfahren nach einem der vorangehenden Ansprüche,
bei dem die Bearbeitung mittels eines Bohrlasers, eines mechanischen oder eines chemischen Abtragverfahrens oder Funkenerosion erfolgt.

## Claims

1. Method for producing a gas turbine component (1) which is to be coated, with exposed holes,
in which the surface configuration of the component (1) is visually predetermined and stored for scanning the position and the shape of the holes before its coating, and, after its coating, the surface configuration of the component (1) is visually rescanned for exposing the holes which are covered with coating material,
wherein based on the predetermined surface configuration of the component (1), a tool (6) is positioned in relation to the component (1) in such a way that the tool (6) exposes the corresponding hole by means of local removal of the coating material (20),
wherein the actual surface configuration of the component (1) is three-dimensionally scanned,
in which the three-dimensional scanning is carried out by means of a triangulation method,
in which the current position of the component (1) or of the holes is calculated by using an especially uncoated reference geometry element (17) which is provided on the component (1).

2. Method according to Claim 1,
in which a projector (3) projects on the component (1) a reference pattern, preferably a movable stripe image, for determining the position of the component (1).

3. Method according to one of the preceding claims,
in which the tool (6) is moved along the contour (12) of the holes.

4. Method according to one of the preceding claims,
in which the processing is carried out by means of a drilling laser, a mechanical or a chemical material removal method, or by means of spark erosion.

## Revendications

1. Procédé de fabrication d'une pièce (1) de turbine à gaz à revêtir et ayant des ouvertures dégagées,
dans lequel on détermine à l'avance visuellement et on mémorise, avant son revêtement, la conformation de surface de la pièce (1) pour détecter la position et la forme des ouvertures et, après son revêtement, on détecte à nouveau visuellement la configuration de surface de la pièce (1) pour dégager les ouvertures recouvertes de matière de revêtement,
dans lequel, en se fondant sur la configuration de surface déterminée à l'avance de la pièce (1), on met un outil (6) en position par rapport à la pièce, de manière à ce que l'outil (6) dégage l'ouverture correspondante par l'élimination locale de la matière (20) de revêtement, dans lequel on détecte, en trois dimensions, la conformation de surface réelle de la pièce (1),
dans lequel la détection en trois dimensions s'effectue au moyen d'un procédé de triangulation,
dans lequel on calcule la position instantanée de la pièce (1) et/ou des ouvertures, en utilisant un élément (17) géométrique de référence prévu sur la pièce (1), notamment non revêtu.

2. Procédé suivant la revendication 1,
dans lequel, pour déterminer la position de la pièce (1), un projecteur (3) projette sur la pièce (1) un motif de référence, de préférence une image de bande en mouvement.

3. Procédé suivant l'une des revendications précédentes, dans lequel on déplace l'outil (6) le long du contour (12) des ouvertures.

4. Procédé suivant l'une des revendications précédentes, dans lequel on effectue l'usinage au moyen d'un laser de perçage, d'un procédé d'enlèvement de matière mécanique ou chimique ou par étincelage.
